# EUROPEAN PATENT APPLICATION

(11) **EP 4 794 011 A1**
(43) Date of publication of application: **19.08.2026**
(21) Application number: 26157950.2
(22) Date of filing: 11.02.2026
(51) Int. Cl.: H01M 4/131, H01M 4/525, H01M 4/58, H01M 10/052

(54) **POSITIVE ELECTRODE FOR RECHARGEABLE LITHIUM BATTERY AND RECHARGEABLE LITHIUM BATTERY INCLUDING THE SAME**

(30) Priority: 12.02.2025 KR 20250018234
(71) Applicant: SAMSUNG SDI CO., LTD., Yongin-si, Gyeonggi-do 17084 (KR)
(72) Inventor: JEONG, Hohyun, 17084 Yongin-si, Gyeonggi-do (KR); KIL, Kichun, 17084 Yongin-si, Gyeonggi-do (KR)
(74) Representative: Michalski Hüttermann & Partner mbB

(57) **Abstract**

Provided are a positive electrode for a rechargeable lithium battery, and a rechargeable lithium battery including the positive electrode. The positive electrode for a rechargeable lithium battery has a structure in which a positive electrode current collector, a functional layer, and a positive electrode active material layer are stacked. The functional layer includes a lithium iron phosphate-based compound and a binder.

## Description

### BACKGROUND

### 1. Field

A positive electrode for a rechargeable lithium battery, and a rechargeable lithium battery including the positive electrode are disclosed.

### 2. Description of the Related Art

A rechargeable lithium battery may be recharged and may have three or more times as high an energy density per unit weight as a conventional lead storage battery, nickel-cadmium battery, nickel hydrogen battery, nickel zinc battery and the like. A rechargeable lithium battery may also be charged at a high rate, and may thus be commercially manufactured for a laptop, a cell phone, an electric tool, an electric bike, and the like. Accordingly, improving on additional energy density may be advantageous.

A rechargeable lithium battery is typically manufactured by injecting an electrolyte solution into an electrode assembly, which includes a positive electrode including a positive electrode active material capable of intercalating/deintercalating lithium ions and a negative electrode including a negative electrode active material capable of intercalating/deintercalating lithium ions.

Battery safety is relevant due to ignition problem of rechargeable lithium batteries, and accordingly, various safety tests, such as a nail penetration test in which the rechargeable lithium batteries are penetrated with a thin nail, are being conducted in the industry.

In this regard, a method of disposing a functional layer made of or including a lithium iron phosphate-based compound between positive electrode current collector and positive electrode active material layer to improve safety of the rechargeable lithium batteries is known.

However, depending on the lithium iron phosphate-based compound, there may be a large difference in powder resistance, and depending on the difference in powder resistance, there may be a significant difference in the safety of rechargeable lithium batteries.

### SUMMARY

One example embodiment ensures conductivity of the positive electrode without adding a conductive material to a functional layer, and to provide substantially uniform quality, such as the safety of a rechargeable lithium battery.

Some example embodiments include a positive electrode for a rechargeable lithium battery having a structure in which a positive electrode current collector, a functional layer, and a positive electrode active material layer are stacked, e.g., sequentially stacked. The functional layer includes a lithium iron phosphate-based compound and a binder, and the positive electrode satisfies Equation 1 below. $0.10 \leq Y / X \leq 0.30 .$

In Equation 1, the definitions of X and Y are given below in the Detailed Description section.

The positive electrode for a rechargeable lithium battery of some example embodiments can ensure the conductivity of the positive electrode without adding a conductive material to the functional layer, and can substantially uniformly provide quality, such as the safety of the rechargeable lithium battery.

### BRIEF DESCRIPTION OF THE DRAWINGS

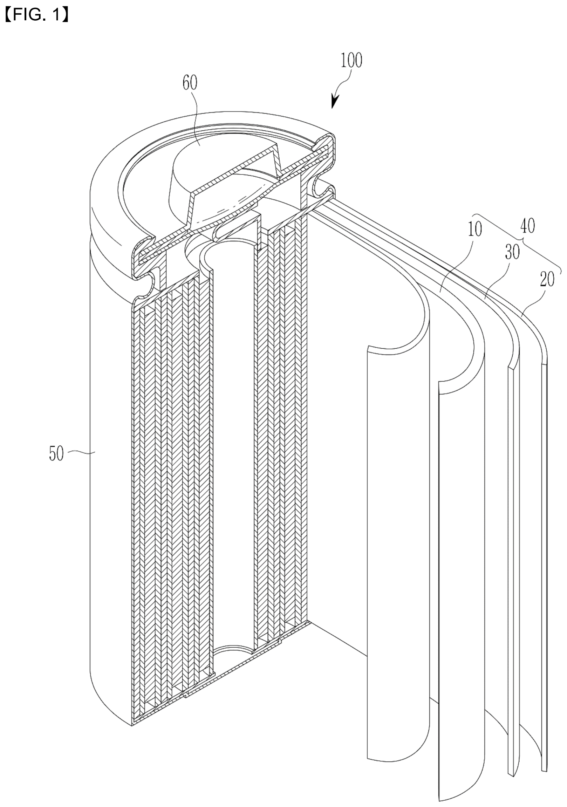

FIGS. 1 to 4 are schematic views illustrating rechargeable lithium batteries according to some example embodiments.

### DETAILED DESCRIPTION

Hereinafter, example embodiments of the present disclosure are described in detail. However, these embodiments are examples, the present disclosure is not limited thereto, and the examples of the present disclosure are defined by the scope of claims.

As used herein, when a definition is not otherwise provided, It is understood that when an element such as a layer, film, region, or substrate is referred to as being "on" another element, the element can be directly on the other element, or intervening elements may also be present therebetween.

As used herein, when a definition is not otherwise provided, the singular may also include the plural. In addition, unless otherwise specified, "A or B" may mean "including A, including B, or including A and B."

As used herein, "combination thereof" may mean a mixture, a stack, a composite, a copolymer, an alloy, a blend, or a reaction product of constituents.

As used herein, when a definition is not otherwise provided, a particle diameter may be an average particle diameter. In addition, the particle diameter may refer to an average particle diameter (D50), which means the diameter of particles having a cumulative volume of 50 volume% in the particle size distribution. The average particle diameter (D50) may be measured by a method known to those skilled in the art, for example, by a particle size analyzer, by a transmission electron microscope image, or by a scanning electron microscope image. Alternatively, a dynamic light-scattering measurement device is used to perform a data analysis, and the number of particles is counted for each particle size range. From this, the average particle diameter (D50) value may be readily obtained through a calculation. Alternatively, the average particle diameter (D50) value can be measured using a laser diffraction method. When measuring by the laser diffraction method, for example, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D50) on the basis of 50% of the particle diameter distribution in the measuring device.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Positive Electrode for Rechargeable Lithium Battery

Some example embodiments include a positive electrode for a rechargeable lithium battery having a structure in which a positive electrode current collector, a functional layer, and a positive electrode active material layer are stacked, e.g., sequentially stacked. The functional layer includes a lithium iron phosphate-based compound and a binder, and the positive electrode satisfies Equation 1 below. $0.10 \leq Y / X \leq 0.30 .$

In Equation 1, the definitions of X and Y are given below in the detailed description.
(1) The positive electrode of some example embodiments includes a functional layer, and the functional layer includes a lithium iron phosphate-based compound.
   Accordingly, a rechargeable lithium battery suitable for various safety evaluations, such as nail penetration evaluation, can be provided.
(2) The positive electrode of some example embodiments satisfies Equation 1 above.

In Equation 1, Y is a powder resistance of the lithium iron phosphate-based compound, which can be a factor determining the safety of the rechargeable lithium battery for nail penetration evaluation.

Accordingly, within the range satisfying Equation 1 above, the conductivity of the positive electrode can be secured without adding a conductive material to the functional layer, and the quality, such as the safety of the rechargeable lithium battery, can be substantially uniformly provided.

However, when the ratio expressed in Equation 1 exceeds the range in Equation 1, an amount of the binder of the functional layer is high, and thus the powder resistance of the functional layer becomes excessively high, and the low-temperature cycle-life of the rechargeable lithium battery may be poor.

On the other hand, when the ratio expressed in Equation 1 falls below the range of Equation 1, an amount of the binder of the functional layer becomes insufficient, the adhesive strength decreases, and the high-temperature cycle-life of the rechargeable lithium battery may be deteriorated.

Hereinafter, the positive electrode for a rechargeable lithium battery according to the aforementioned example embodiments is described in detail.

### Equations 1 and 2

The powder resistance (X) of the functional layer and the powder resistance (Y) of the lithium iron phosphate-based compound can satisfy Equation 1. $0.10 \leq Y / X \leq 0.30 .$

The lower limit of Equation 1 may be about 0.10, about 0.12, or about 0.14; and the upper limit of Equation 1 may be about 0.30, about 0.25, or about 0.21.

In addition, the powder resistance (X) of the functional layer, the powder resistance (Y) of the lithium iron phosphate-based compound, and the amount (Z) of the binder based on 100 wt% of the total amount of the functional layer may satisfy Equation 2 below: $0.60 wt % \leq Z * Y / X \leq 0.80 wt % .$

In Equation 2, X is the powder resistance of the functional layer; Y is the powder resistance of the lithium iron phosphate-based compound; and Z is the amount of the binder based on 100 wt% of the total amount of the functional layer.

The lower limit of Equation 2 may be about 0.60 wt%, about 0.61 wt%, or about 0.63 wt%; and the upper limit may be about 0.80 wt%, about 0.75 wt%, or about 0.72 wt%.

In Equations 1 and 2, X may be in a range of ≥ 10 Ω cm to ≤ 300 Ω cm, ≥ 50 Ω cm to ≤ 250 Ω cm, or ≥ 100 Ω cm to ≤ 200 Ω cm; Y may be in a range of ≥ 1 Ω cm to ≤ 100 Ω cm, ≥ 10 Ω cm to ≤ 50 Ω cm, or ≥ 20 Ω cm to ≤ 40 Ω cm; and Z may be greater than 0 wt% and less than or equal to about 10 wt%, ≥ 1 wt% to ≤ 7 wt%, or ≥ 3 wt% to ≤ 5 wt%.

When Equations 1 and 2 are satisfied, the positive electrode for a rechargeable lithium battery of some example embodiments may secure the conductivity of the positive electrode without adding a conductive material to the functional layer, and may substantially uniformly provide the quality, such as the safety of the rechargeable lithium battery.

### Components of Functional Layer

The functional layer can secure the conductivity of the positive electrode while not including a conductive material.

For example, the lithium iron phosphate-based compound contributes to improving the safety of the positive electrode, but can also constitute a so-called 'positive electrode active material' that contributes to the capacity exhibition of the positive electrode. Accordingly, when the functional layer does not include a conductive material, an amount of the lithium iron phosphate-based compound in the functional layer may be relatively increased, thereby increasing the capacity of the positive electrode.

The binder may be or include at least one of a non-aqueous binder and an aqueous binder.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, or a combination thereof.

Among these, polyvinylidene fluoride has high impregnation properties for electrolyte solutions, which may reduce the adhesive strength when the functional layer comes into contact with the electrolyte solution. In contrast, (meth)acrylic resin and polyvinyl alcohol may maintain high adhesive strength even when impregnated with electrolyte solution. Accordingly, the safety of the functional layer using the latter binder may be higher.

The lithium iron phosphate-based compound maybe represented by Chemical Formula 1 below:

Chemical Formula 1: LiₐFeₓM_{y}PO_{4-b}X_{b}.

In Chemical Formula 1, 0.9≤a≤1.8, 0.6≤x≤1, 0≤y≤0.4, and 0≤b≤0.1, M is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or of F, P, and S.

For example, the lithium iron phosphate-based compound may be or include LiFePO₄, and the particle surface thereof may be coated with a carbon material to improve conductivity.

Based on a total amount of 100 wt% of the functional layer, the lithium iron phosphate-based compound may be included in an amount in a range of ≥ 80 wt% to ≤ 99 wt%, ≥ 80 wt% to ≤ 98 wt%, or ≥ 80 wt% to ≤ 96 wt%.

Within the above range, it is possible to substantially uniformly provide quality, such as safety, of the rechargeable lithium battery.

### Thickness of Functional Layer

The thickness of the functional layer may be in a range of ≥ 0.1 µm to ≤ 10 µm, ≥ 0.3 µm to ≤ 5 µm, or ≥ 0.5 µm to ≤ 4 µm.

Even when the functional layer is formed with a thin thickness as described above, safety can be ensured and the capacity of the battery can be maintained without being impaired.

### Positive Electrode Active Material Layer

By forming the functional layer with a thin thickness as described above, the positive electrode active material layer may be formed relatively thickly.

For example, the thickness ratio of the functional layer and the positive electrode active material layer may be in a range of about 1:5 to about 1:100, about 1:10 to about 1:50, or about 1:15 to about 1:30. Accordingly, the capacity of rechargeable lithium batteries may be improved.

The positive electrode active material may be or include a compound (lithiated intercalation compound) capable of intercalating and deintercalating lithium. For example, one or more types of composite oxides of lithium and a metal such as or including at least one of cobalt, manganese, nickel, and combinations thereof may be used.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11: Liₐ₁Niₓ₁M¹_{y1}M²_{z1}O_{2-b1}X_{b1}.

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² each independently is or includes one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12: Liₐ₂Coₓ₂M³_{y2}O_{2-b2}X_{b2}.

In Chemical Formula 12, 0.9≤a2≤1.8, 0.7≤x2≤1, 0≤y2≤0.3, 0.9≤x2+y2≤1.1, and 0≤b2≤0.1, M³ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: Liₐ₃Feₓ₃M⁴y₃PO_{4-b3}X_{b3}.

In Chemical Formula 13, 0.9≤a3≤1.8, 0.6≤x3≤1, 0≤y3≤0.4, and 0≤b3≤0.1, M⁴ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: Liₐ₄Niₓ₄Mn_{y4}M⁵_{z4}O_{2-b4}X_{b4}.

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, M⁵ is or includes one or more of Al, B, Ba, Ca, Ce, Cr, Fe, Mg, Mo, Nb, Si, Sn, Sr, Ti, V, W, and Zr, and X is or includes one or more of F, P, and S.

For example, the positive electrode active material may be or include a high-nickel positive electrode active material in which the nickel content is greater than or equal to about 80 mol%, greater than or equal to about 85 mol%, greater than or equal to about 90 mol%, greater than or equal to about 91 %, or greater than or equal to about 94 mol% and less than or equal to about 99 mol%, based on 100 mol% of metal excluding lithium in the lithium transition metal composite oxide. The high-nickel positive electrode active material can achieve high capacity and can be applied to high-capacity, high-density rechargeable lithium batteries.

The positive electrode active material layer may include a positive electrode active material, and may further include a binder and/or a conductive material.

For example, the positive electrode may further include an additive that can constitute a sacrificial positive electrode.

An amount of the positive electrode active material may be in a range of ≥ 90 wt% to ≤ 99.5 wt% based on 100 wt% of the positive electrode active material layer, and each amount of the binder and the conductive material may be in a range of ≥ 0.1 wt% to ≤ 5 wt% based on 100 wt% of the positive electrode active material layer.

The binder improves binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity, and any electrically conductive material may be used as a conductive material unless the electrically conductive material causes an adverse chemical change in the battery. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

### Rechargeable Lithium Battery

Some example embodiments include a rechargeable lithium battery including a positive electrode, a negative electrode, and a separator between the positive electrode and the negative electrode, and an electrolyte solution.

Because the rechargeable lithium battery includes the positive electrode of the above-mentioned example embodiment, both safety and capacity may be improved.

Hereinafter, a rechargeable lithium battery according to the above example embodiment is described in detail, excluding any description overlapping with the above-mentioned description.

### Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is or includes an element such as or including at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

### Negative Electrode

A negative electrode for a rechargeable lithium battery includes a current collector and a negative electrode active material layer on the current collector. The negative electrode active material layer includes a negative electrode active material, and may further include a binder and/or a conductive material.

For example, the negative electrode active material layer may include ≥ 90 wt% to ≤ 99 wt% of the negative electrode active material, ≥ 0.5 wt% to ≤ 5 wt% of the binder, and ≥ 0.5 wt% to ≤ 5 wt% of the conductive material.

The binder adheres the negative electrode active material particles to each other, and adheres the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder is or includes a polymer material capable of being fiberized, and may be or include, for example, at least one of polytetrafluoroethylene, polyvinylidene fluoride, polyvinylidene fluoride-hexafluoropropylene copolymer, polyethylene oxide, or a combination thereof.

The conductive material is included to provide electrode conductivity, and any electrically conductive material may be used as a conductive material unless the electrically conductive material causes an adverse chemical change in the battery. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless-steel foil, a titanium foil, a nickel foam, a copper foam, a polymer substrate coated with a conductive metal, and a combination thereof.

### Electrolyte Solution

An electrolyte solution for a rechargeable lithium battery may include a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone, or in a mixture of two or more types of solvents.

For example, when using a carbonate-based solvent, a cyclic carbonate and a chain carbonate may be mixed, and the cyclic carbonate and the chain carbonate may be mixed in a volume ratio in a range of about 1:1 to about 1:9.

The electrolyte solution may further include at least one of vinylethyl carbonate, vinylene carbonate, fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, or a combination thereof as an additive.

The lithium salt dissolved in the organic solvent supplies lithium ions in a battery, enables an operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

### Separator

Depending on the type of rechargeable lithium battery, a separator may be present between the positive and negative electrodes. The separator may include at least one of polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, a polypropylene/polyethylene/polypropylene three-layer separator, and the like.

The separator may include a porous substrate and a coating layer including an organic material, an inorganic material, or a combination thereof on one surface, or on both surfaces of the porous substrate.

The porous substrate may be or include a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

### Rechargeable Lithium Battery

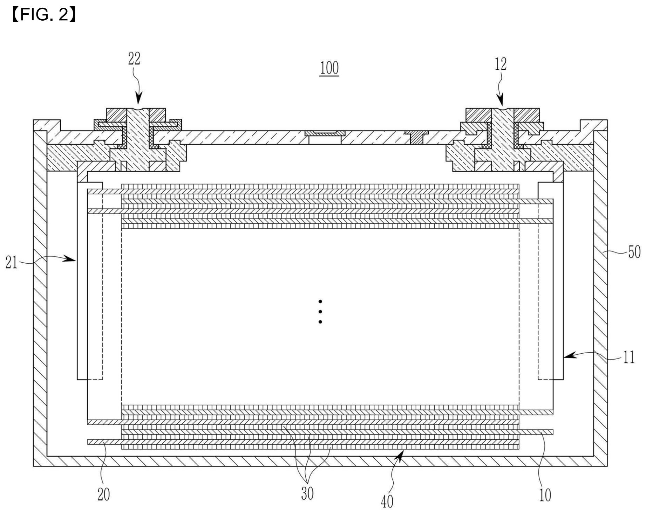

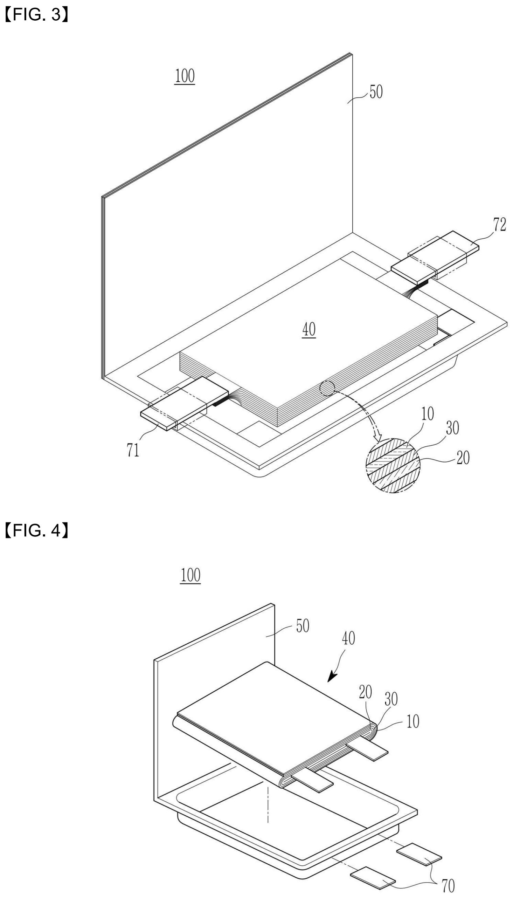

The rechargeable lithium battery may be classified into cylindrical, prismatic, pouch, or coin-type batteries, and the like depending on the shape thereof. FIGS. 1 to 4 are schematic views showing the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electric path for inducing the current formed in the electrode assembly 40 to the outside of the battery 100.

The rechargeable lithium battery according to some example embodiments may be applicable to, e.g., automobiles, mobile phones, and/or various types of electrical devices, but the present disclosure is not limited thereto.

Examples and comparative examples of the present disclosure are described below. However, the following examples are only examples of the present disclosure, and the present disclosure is not limited to the following examples.

### Example 1

### (1) Manufacturing of Positive Electrode

As a positive electrode current collector, an aluminum foil with width*length*thickness of 80 mm*1400 mm*9 um was used.

A functional layer slurry was prepared by mixing LiFePO₄ with powder resistance of 30 Ω·cm as a lithium iron phosphate-based compound and a PAA binder in a weight ratio of 97:3, and then dispersing the mixture in N-methyl-2-pyrrolidone. This slurry was coated to be 6 um thick on the aluminum foil and then, compressed to form a functional layer.

A positive electrode slurry was prepared by mixing LiNi_{0.91}Co_{0.05}Al_{0.04}O₂ as a positive electrode active material, polyvinylidene fluoride (PVDF) as a binder, and carbon as a conductive agent in a weight ratio of 92:4:4, and then dispersing the mixture in N-methyl-2-pyrrolidone. This slurry was coated to be 40 um thick on the functional layer, and then compressed to form a positive electrode active material layer.

### (2) Manufacturing of Negative Electrode

A mixture of artificial graphite and silicon particles in a weight ratio of 93.5:6.5 was used as a negative electrode active material, and the negative electrode active material: styrene-butadiene rubber binder: carboxymethyl cellulose were mixed in a weight ratio of 97:1:2 and dispersed in distilled water to prepare a negative electrode active material slurry.

The negative electrode active material slurry was coated on a 10 µm-thick Cu foil, dried at 100 °C, and then pressed to form a negative electrode active material layer.

### (3) Preparation of Electrolyte Solution

An electrolyte solution was prepared by mixing 1.5 M lithium salt (LiPF₆) in a carbonate-based solvent including ethylene carbonate (EC): ethyl methyl carbonate (EMC): dimethyl carbonate (DMC) in a volume ratio of 20:40:40.

### (4) Manufacturing of Rechargeable Lithium Battery Cell

The manufactured positive and negative electrodes were assembled to manufacture an electrode assembly, the electrode assembly was accommodated in a pouch-type case, and the electrolyte solution was injected to manufacture a rechargeable lithium battery cell.

### Example 2

A positive electrode and a rechargeable lithium battery cell of Example 2 were manufactured in the same manner as in Example 1, with a difference that the weight ratio of LiFePO₄ with powder resistance of 30 Ω·cm as a lithium iron phosphate-based compound and a PAA binder was changed to 96:4.

### Example 3

A positive electrode and a rechargeable lithium battery cell of Example 3 were manufactured in the same manner as in Example 1, with a difference that the weight ratio of LiFePO₄ with powder resistance of 30 Ω·cm as a lithium iron phosphate-based compound and a PAA binder was changed to 95:5.

### Comparative Example 1

A positive electrode and a rechargeable lithium battery cell of Comparative Example 1 were manufactured in the same manner as in Example 1, with a difference that the weight ratio of LiFePO₄ with powder resistance of 30 Ω·cm as a lithium iron phosphate-based compound and a PAA binder was changed to 99:1.

### Comparative Example 2

A positive electrode and a rechargeable lithium battery cell of Comparative Example 2 were manufactured in the same manner as in Example 1, with a difference that the weight ratio of LiFePO₄ with powder resistance of 30 Ω·cm as a lithium iron phosphate-based compound and a PAA binder was changed to 98:2.

### Comparative Example 3

A positive electrode and a rechargeable lithium battery cell of Comparative Example 3 were manufactured in the same manner as in Example 1, with a difference that the weight ratio of LiFePO₄ with powder resistance of 30 Ω·cm as a lithium iron phosphate-based compound and a PAA binder was changed to 93:7.

### Comparative Example 4

A positive electrode and a rechargeable lithium battery cell of Comparative Example 4 were manufactured in the same manner as in Example 1, with a difference that the weight ratio of LiFePO₄ with powder resistance of 30 Ω·cm as a lithium iron phosphate-based compound and a PAA binder was changed to 92:8.

### Evaluation Example 1: Evaluation of Functional Layer

The functional layer slurries and functional layers of Examples 1 to 3 and Comparative Examples 1 to 4 were respectively evaluated in the following method, and the results are shown in Table 1 below.
(1) Functional Layer Powder Resistance: A power resistance measuring instrument made by Hantech Ltd. was used under measurement conditions : 2000 kgf.
(2) Functional Layer Adhesive Strength: A tensile tester made by Instron was used at a measurement speed: 100 mm/min.

**Table 1:**

| | Amou nt of binder (%) | LFP powder resistance (Ωcm) | Slurry powder resistance (Ωcm) | Equa tion 1 | Equati on 2 (wt%) | Adhesive strength of functional layer (gf/mm) |
|---|---|---|---|---|---|---|
| Comparative Example 1 | 1 | 30 | 67.2 | 0.45 | 0.45 | 5.1 |
| Comparative Example 2 | 2 | 30 | 94.5 | 0.32 | 0.64 | 11.2 |
| Example 1 | 3 | 30 | 143.3 | 0.21 | 0.63 | 16.7 |
| Example 2 | 4 | 30 | 183.5 | 0.16 | 0.65 | 21.3 |
| Example 3 | 5 | 30 | 208.4 | 0.14 | 0.72 | 25.6 |
| Comparative Example 3 | 7 | 30 | 350.2 | 0.09 | 0.60 | 32.1 |
| Comparative Example 4 | 10 | 30 | 550.5 | 0.05 | 0.54 | 40.1 |

In Table 1 above, the 'amount of binder' refers to an amount of a binder based on 100 wt% of a solid content in each of the functional layer slurries.

### Evaluation Example 2: Evaluation of Positive Electrode

Each of the positive electrodes according to Examples 1 to 3 and Comparative Examples 1 to 4 were evaluated in the following method, and the results are shown in Table 2 below.

Nail Penetration: When fully-charged cells were penetrated with a nail having a diameter of 3*π* at a speed of 150 mm/sec, if ignited, X was given, but if not ignited, ⊚ was given.

### Evaluation Example 3: Evaluation of Rechargeable Lithium Battery Cell

Each of the rechargeable lithium battery cells of Examples 1 to 3 and Comparative Examples 1 to 4 were evaluated in the following method, and the results are shown in Table 2 below.

Cycle-life Characteristics: the cells were 400 cycles charged and discharged at 1.0 C within a voltage range of 3.0 V to 4.3 V at 25 °C to calculate a ratio of 60^{th} cycle discharge capacity to initial discharge capacity, and the results are shown in Table 2 below.

**Table 2:**

| | Nail penetration | 45 °C cycle-life (400 cycles) | 15 °C cycle-life (400 cycles) |
|---|---|---|---|
| Comparative Example 1 | ⊚ | 70 | 89 |
| Comparative Example 2 | ⊚ | 85 | 88.5 |
| Example 1 | ⊚ | 92.4 | 88.2 |
| Example 2 | ⊚ | 91.5 | 84.3 |
| Example 3 | ⊚ | 91.7 | 81.5 |
| Comparative Example 3 | ⊚ | 90.3 | 75.3 |
| Comparative Example 4 | ⊚ | 89.2 | 68.2 |

Comparative Examples 1 and 2, in which the functional layer exceeded Equation 1 and included a large amount of the binder, thereby causing excessively high powder resistance, exhibited deteriorated low temperature cycle-life of the rechargeable lithium battery cells.

Comparative Examples 3 and 4, in which the functional layer fell short of Equation 1 and included a small amount of binder, thereby resulting in deteriorated adhesive strength, exhibited deteriorated high-temperature cycle-life of the rechargeable lithium battery cells.

On the contrary, Examples 1 to 6, in which the functional layer satisfied Equation 1, secured conductivity of the positive electrodes without adding a conductive material to the functional layer and substantially uniformly provided quality such as safety, and the like, of the rechargeable lithium battery cells.

Accordingly, the positive electrode for a rechargeable lithium battery according to an example embodiment of the present disclosure, which was represented by Examples 1 to 6, was confirmed to secure conductivity without adding a conductive material to the functional layer and substantially uniformly provide quality such as safety, and the like, of rechargeable lithium batteries.

While this disclosure has been described in connection with what is presently considered to be practical example embodiments, it is to be understood that the disclosure is not limited to the disclosed embodiments. On the contrary, the disclosure is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode (10) for a rechargeable lithium battery (100), the positive electrode (10) having a structure in which a positive electrode current collector, a functional layer, and a positive electrode active material layer are stacked;
wherein the functional layer comprises:
a lithium iron phosphate-based compound and binder and satisfies Equation 1: $0.10 \leq Y / X \leq 0.30 ;$
wherein, in Equation 1,
X is a powder resistance of the functional layer; and
Y is a powder resistance of the lithium iron phosphate-based compound.

2. The positive electrode (10) as claimed in claim 1, wherein the functional layer additionally satisfies Equation 2: $0.60 wt % \leq Z * Y / X \leq 0.80 wt % ;$ wherein, in Equation 2,
X is a powder resistance of the functional layer;
Y is a powder resistance of the lithium iron phosphate-based compound; and
Z is an amount of the binder based on 100 wt% of the total amount of the functional layer.

3. The positive electrode (10) as claimed in claim 1 or 2, wherein X is in a range of ≥ 10 Ω·cm to ≤ 300 Ω·cm.

4. The positive electrode (10) as claimed in any one of claims 1 to 3, wherein Y is in a range of ≥ 1 Ω·cm to ≤ 100 Ω·cm.

5. The positive electrode (10) as claimed in any one of claims 1 to 4, wherein Z is greater than 0 wt% and less than or equal to about 10 wt%.

6. The positive electrode (10) as claimed in any one of claims 1 to 5, wherein the functional layer does not comprise a conductive material.

7. The positive electrode (10) as claimed in any one of claims 1 to 6, wherein the lithium iron phosphate-based compound is represented by Chemical Formula 1:
Chemical Formula 1: LiₐFeₓM_{y}PO_{4-b}X_{b};
wherein, in Chemical Formula 1,
0.9≤a≤1.8, 0.6≤x≤1, 0≤y≤0.4, and 0≤b≤0.1,
M comprises one or more of Al, B, Ba, Ca, Ce, Co, Cr, Cu, Mg, Mn, Mo, Ni, Se, Si, Sn, Sr, Ti, V, W, Y, Zn, and Zr, and
X comprises one or more of F, P, and S.

8. The positive electrode (10) as claimed in any one of claims 1 to 7, wherein:
based on a total amount of 100 wt% of the functional layer, the lithium iron phosphate-based compound is included in an amount in a range of ≥ 80 wt% to ≤ 99 wt%.

9. The positive electrode (10) as claimed in any one of claims 1 to 8, wherein a thickness of the functional layer is in a range of ≥ 0.1 µm to ≤ 10 µm.

10. The positive electrode (10) as claimed in any one of claims 1 to 9, wherein a thickness ratio of the functional layer and the positive electrode active material layer is in a range of about 1:5 to about 1:100.

11. The positive electrode (10) as claimed in any one of claims 1 to 10, wherein the positive electrode active material comprises one or more types of composite oxides of lithium and a metal comprising at least one of cobalt, manganese, nickel, and combinations thereof.

12. A rechargeable lithium battery (100), comprising:
the positive electrode (10) as claimed in any one of claims 1 to 11;
a negative electrode (20); and
an electrolyte between the positive electrode (10) and the negative electrode (20).
